# EUROPEAN PATENT SPECIFICATION

(11) **EP 1 136 709 B1**
(45) Date of publication and mention of the grant of the patent: **29.01.2003**
(21) Application number: 01201038.5
(22) Date of filing: 20.03.2001
(51) Int. Cl.: F16B 37/08, F16B 37/12

(54) **Push-in locking element**
Einsteckverriegelungselement
Elément de blocage par emboîtement

(30) Priority: 23.03.2000 NL 1014736
(43) Date of publication of application: 26.09.2001
(73) Proprietor: FLAMCO B.V., NL-2802 AC Gouda (NL)
(72) Inventor: Jaspers, Antonius Nicolaas Johannes, 2804 PH Gouda (NL)
(74) Representative: Riemens, Roelof Harm

(56) References cited:
- AT-B- 401 189
- GB-A- 628 316
- US-A- 4 298 297
- US-A- 4 626 009

## Description

The invention relates to a push-in locking element, in which a threaded end can be fitted both by means of screwing and by means of pushing in.

Such locking elements are known in many variants, for example from US-A-4,378,187. Fig. 5 of this American patent publication shows a locking nut housing with a cavity in which three internally threaded clamping parts are accommodated. In the cavity the clamping parts are forced inwards in the radial direction by means of a spring washer surrounding the clamping parts. Both the cavity in the housing and also the three clamping parts are provided with complementary slanting walls. Pushing in a threaded end in the axial direction will cause the clamping parts to move upwards in the axial direction and outwards in the radial direction. After the push-in force in the axial direction has been removed, the clamping parts, under the influence of the spring washer, will move downwards in the axial direction and inwards in the radial direction again, and will clamp down the threaded end. The locking element is in the form of a nut and can be removed again by unscrewing said nut, just as in the case of a conventional locking nut.

A disadvantage in the case of the known locking element is that it contains a relatively large number of parts that are expensive to manufacture and complex to assemble. The force required to push a threaded end into the locking element is relatively great. This is partly due to the fact that the three clamping parts are in contact with the slanting walls of the cavity at all times. During movement of the clamping parts in the cavity, a friction force always has to be overcome. This makes it necessary to use a heavy spring washer, which in turn increases the force required during the pushing-in operation. While the threaded end is being pushed in, it can happen that one of the clamping parts becomes jammed between the walls of the cavity. The result is that the locking action of the locking element is not always reliable.

A locking element according to the preamble of claim 1 is known from WO-A-9608659. Furthermore a locking element is described in the non-prepublished European patent application EP-A-1 130 274.

The object of the invention is to overcome the abovementioned disadvantages, and in particular to provide a simple and cheap push-in locking element that works very reliably. More particularly, the object of the invention is to provide a push-in locking element that can be connected quickly to a threaded end and in a clamping position that automatically follows such connection can grip the threaded end in a manner that is as play-free as possible.

This object is achieved according to the invention by a push-in locking element according to claim 1. The locking element comprises a housing with a cavity into which a threaded end is to be pushed. A substantially annular gripping element, which is interrupted at one point and can spring in the radial direction, is accommodated in the cavity. A spring element that is elastically deformable in the axial direction is further accommodated in the cavity. The spring element, viewed in the push-in direction, is positioned above or below the gripping element. The cavity, viewed in the push-in direction, has parts with increasing radial dimensions. If a threaded end is pushed inwards into the cavity, the gripping element will be forced through deformation of the spring element towards a wider part of the cavity. In said wider cavity part the gripping element has the opportunity to deflect so far outwards in the radial direction that one or more threads of the threaded end can pass the gripping element. If the push-in force on the threaded end is subsequently removed, the spring element will press or pull the gripping element back to a narrower part of the cavity. In this narrower part of the cavity the gripping element is bounded by peripheral wall parts of the cavity in such a close-fitting manner that innermost edge parts of the gripping element will have to engage in one or more threads of the inserted threaded end, which can subsequently be subjected to a tensile load. A reliably operating locking element that can be manufactured cheaply with a minimum number of parts is thus provided according to the invention. The small number of parts is easy to assemble. The locking element can be designed externally as a nut, but it can also be provided in a simple manner in various other types of applications.

The gripping element and the spring element are two separate parts. The gripping element can be, for example, a metal spring washer, and the spring element a rubber O-ring. It is therefore possible to make the locking element of only three parts. The gripping element and the spring element in this case can even advantageously be selected from commercially available spring washers and O-rings.

The transition from the narrower to the wider cavity part can be a gradual one, for example in the form of a truncated cone-shaped cavity with increasing radial dimensions. In a preferred embodiment the transition from the narrower to the wider cavity part is stepwise, so that at least a first and a second cavity part can be distinguished. The gripping element in the case of this stepwise transition does not have the freedom to deflect outwards in the radial direction until it is in the second, wider cavity part. Once a threaded end has been pushed in and locked in position, it will not readily be able to rattle inside the locking element. The locking engagement of the gripping element is in fact retained until such time as the threaded end has been moved in the push-in direction over at least the height of the first narrow cavity part. Only then can the gripping element deflect outwards in the radial direction and provide play at the threaded end.

Further preferred embodiments of the invention are set out in the subclaims.

The invention will be explained in greater detail with reference to the appended drawing, in which:
Fig. 1 shows a view in cross section of a preferred embodiment of a push-in locking element according to the invention, with a threaded end not yet pushed in;
Fig. 2 is a view corresponding to Fig. 1 during the pushing in of the threaded end;
Fig. 3 is a view corresponding to Fig. 1, in which the threaded end is subjected to a tensile load after being pushed in;
Fig. 4 shows the housing of the locking element in Figs. 1 - 3;
Fig. 5 shows the gripping element in Figs. 1 - 3; and
Fig. 6 shows the spring element in Figs. 1 - 3.

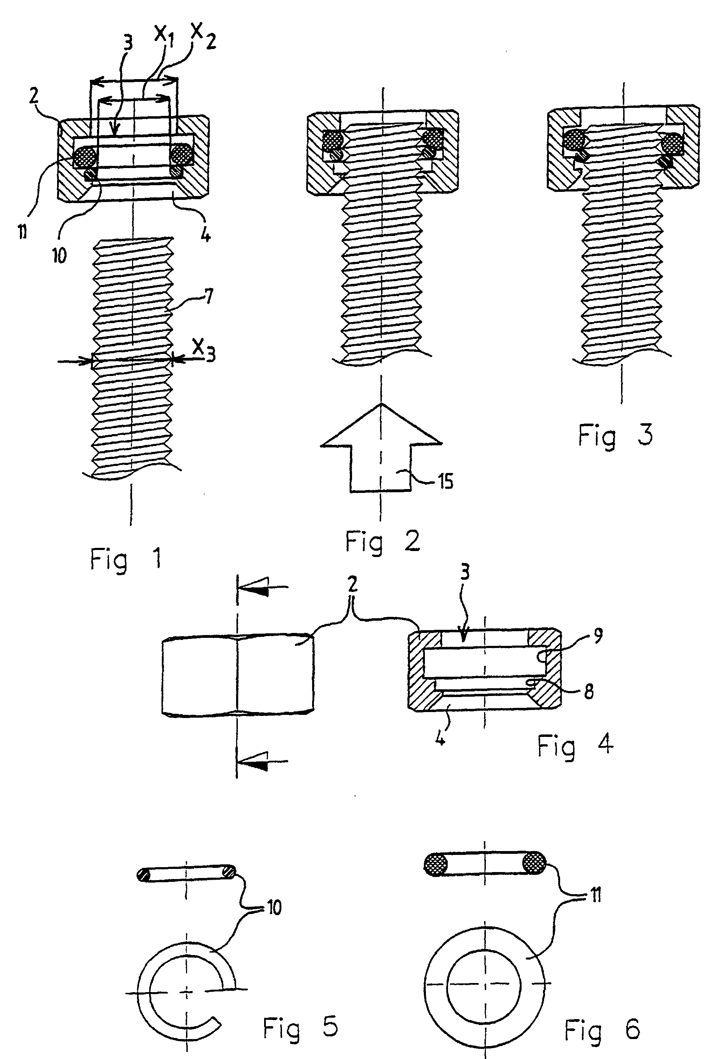

The push-in locking element 1 in Fig. 1 comprises a housing 2, in which a cavity 3, extending in the axial direction, is provided. The cavity 3 is in the form of a through-going cavity and comprises on the underside an insertion aperture 4, into which a threaded end 7 is intended to be pushed. As can be seen clearly in Fig. 4, the cavity 3 comprises a widened part, with a first cavity part 8 and a second cavity part 9 connecting stepwise thereto. The radial dimensions of the second cavity part 9 are greater than the radial dimensions of the first cavity part 8. A gripping element 10 and a spring element 11 are accommodated in the cavity parts 8, 9. The gripping element 10 is formed by a spring washer that is interrupted at one point and can spring in the radial direction (see also Fig. 5). The spring element 11 is formed by an annular element made of a compressible material (see also Fig. 6).

In the unloaded state such as shown in Fig. 1, the gripping element 10 is situated substantially strain-free in the first cavity part 8, and the spring element 11 is situated in the second cavity part 9. The outer peripheral edge of the gripping element 10 in this position is bounded towards the outside by the inner peripheral wall of the first cavity part 8. The inner peripheral edge of the gripping element 10 in this position has a radial dimension x1 that is smaller than the smallest radial dimension x2 of the cavity 3, and is smaller than the largest radial dimension x3 of the threaded end 7.

If the threaded end 7 is pushed inwards in an axial push-in direction 15 into the locking element 1, as shown in Fig. 2, then the front end of the threaded end 7 will knock against the gripping element 10. The gripping element 10 cannot deflect outwards in the first cavity part 8 and will therefore be forced forward by the front end of the threaded end 7, so that the spring element 11 is compressed. Once it has reached the second, wider cavity part 9, the gripping element 10 has sufficient space for it to be forced open in the radial direction to such an extent that one or more threads of the threaded end 7 can pass. In this process the gripping element 10 is forced open in the radial direction by a suitable wedging action between slanting walls of the threads and the rounded inner peripheral edge of the gripping element 10.

As soon as the push-in force is removed, the gripping element 10 will spring inwards in the radial direction, in which case its inner peripheral edge will engage in a thread. The spring element 11 will force the gripping element 10 back into the first cavity part 8. On account of the limited space in the first cavity part 8, the gripping element 10 can act upon the threaded end 7 only in a locking manner there. Owing to the fact that the gripping element 10 is bounded in a direction opposite to the push-in direction 15 by a side wall of the first cavity part 8, it is advantageously ensured that the threaded end 7 is likewise bounded in the direction opposite to the push-in direction 15 and can be placed under tensile load relative to the locking element 1. Further pushing inwards of the threaded end 7 remains possible, in which case the process described above will be repeated. By way of alternative, the user is also free to screw the threaded end 7 further into or unscrew it further out of the locking element 1. The gripping element 10 acts here as the internal thread of the locking element 1, which interacts with the external thread of the threaded end 7.

The gripping element 10 is advantageously formed by a metal spring washer, which is made of, for example, phosphor bronze. Such a ring is already commercially available and therefore does not need to be specially manufactured. The gripping element 10 here has a round cross section and consequently a rounded inner peripheral edge, a shape which facilitates the pushing in of a threaded end. The thickness of the inner peripheral edge is less than the pitch of the threaded end 7. In the pushed-in state the spring washer will engage in one thread of the screw thread. It has been found in practice that this produces a more than sufficiently strong boundary of the threaded end, which is suitable for many kinds of applications. In the unloaded state (see Fig. 5), the gripping element 10 has dimensions that correspond to those shown in Fig. 1, i.e. dimensions that correspond to those of the first cavity part 8. After the gripping element 10 has been forced open under the influence of the pushing in of the threaded end 7, it will have a tendency to spring back to its initial dimensions again.

In a variant, the gripping element can also be in other forms, for example having inner peripheral edge parts that are designed to interact with several threads of a threaded end, or having a profiled inner peripheral edge that can only partially grip a threaded end.

The spring element 11 is formed here by a rubber O-ring, which is also commercially available and does not need to be manufactured specially. In a variant, the compressible spring element can be in various other forms that fill up the widened part of the cavity to a greater or lesser extent. For instance, the spring can also be composed of, for example one or more parts of a compressible material that are fixed in the cavity.

The embodiment shown, having two cavity parts 8, 9 with a stepwise transition into each other, has the great advantage that the threaded end 7 will not readily be able to rattle inside the locking element 1. The locking engagement of the gripping element 10 on the threaded end 7 is in fact retained just until such time as the threaded end 7 is moved together with the gripping element 10 over the height of the first cavity part 8 in the push-in direction 15. Only then will the gripping element 10 be able to deflect outwards in the radial direction, resulting in increasing play.

Many variants are conceivable in addition to the embodiments shown. For instance, in one variant the widened part of the cavity can be of a conical design with a radius that increases in the push-in direction. The cavity parts then, as it were, gradually merge into each other. The housing of the locking element can be either in one part or in several parts.

In this way, according to the invention, a reliably working push-in locking element that can be manufactured very simply and cheaply with a minimum of parts has been provided. The push-in locking element can advantageously be used as a push-on nut. The push-in locking element according to the invention will constitute a good solution in all cases where threaded elements have to be inserted quickly into a push-in locking element and subsequently have to be able to be subjected to a tensile load. Great time savings can be achieved, in particular in the case of pipe brackets by means of which pipes have to be fixed to ceilings and/or walls.

## Claims

1. Push-in locking element, comprising:
- a housing (2) with a cavity (3) that extends in an axial direction (15) and has a push-in aperture (4) into which a threaded end (7) to be locked is to be pushed;
- clamping means, which are accommodated in the cavity (3) and are movable therein between a free position and a clamping position;
spring means, which are accommodated in the cavity (3) for forcing the clamping means in the direction of the clamping position, and which comprise a spring element (11) that is elastically deformable in the axial direction,
in which the cavity (3), viewed in the push-in direction (15), comprises parts with increasing radial dimensions,
in which the clamping means in the narrower cavity part are bounded towards the inside in the radial direction by peripheral wall parts of the narrower cavity part, in which clamping position innermost edge parts of the clamping means are situated on a radius that is smaller than the radius of the threaded end to be pushed in,
and
in which the clamping means in the wider cavity part have the freedom to move outwards in the radial direction into the free position, in which free position the innermost edge parts of the clamping means can come to lie on a radius that is greater than the radius of the threaded end to be pushed in,
**characterized in that**
the clamping means comprise a substantially annular gripping element (10), which is interrupted at one point and is made of a spring material that can deflect outwards in the radial direction, in which the gripping element and the spring element are two separate parts.

2. Push-in locking element according to claim 1, in which the transition from the narrower cavity part to the wider cavity part is stepwise, in such a way that when a threaded end (7) is being pushed in, the gripping element (10) will be forced through deformation of the spring element (11) in the axial direction out of the narrower cavity part (8) into the wider cavity part (9), and only there has the opportunity to deflect outwards in the radial direction until it is in the free position.

3. Push-in locking element according to claim 1 or 2, in which the gripping element (10) is a metal spring washer.

4. Push-in locking element according to one of the preceding claims, in which the spring element (11) is a spring element which is compressible in the axial direction, and which, viewed in the push-in direction (15), is provided above the gripping element (10).

5. Push-in locking element according to claim 4, in which the spring element (11) is a rubber O-ring.

6. Push-in locking element according to one of the preceding claims, in which the gripping element (10) has a rounded inner peripheral edge with a thickness that is less than or equal to the pitch of the threaded end (7) to be pushed in.

## Patentansprüche

1. Einsteck-Verriegelungselement, umfassend:
- ein Gehäuse (2) mit einem Hohlraum (3), der sich in axialer Richtung (15) erstreckt und eine Einstecköffnung (4) besitzt, in die ein mit Gewinde versehenes Ende (7), das verriegelt werden soll, einzustecken ist;
- Klemmittel, die in dem Hohlraum (3) aufgenommen sind und darin zwischen einer freien Position und einer Klemmposition beweglich sind;
- Federmittel, die in dem Hohlraum (3) aufgenommen sind, die Klemmittel in Richtung der Klemmposition vorbelasten und ein Federelement (11) umfassen, das in axialer Richtung elastisch verformbar ist,
wobei der Hohlraum (3) bei Betrachtung in Einschubrichtung (15) Abschnitte mit zunehmenden radialen Abmessungen umfaßt,
wobei die Klemmittel im schmaleren Hohlraumabschnitt in radialer Richtung zur Innenseite durch Umfangswandabschnitte des schmaleren Hohlraumabschnitts begrenzt sind und die innersten Kantenabschnitte in der Klemmposition der Klemmittel auf einem Radius liegen, der kleiner als der Radius des einzuschiebenden Gewindeendes ist, und
wobei die Klemmittel in dem weiteren Hohlraumabschnitt sich in radialer Richtung in die freie Position nach außen bewegen können und die innersten Kantenabschnitte der Klemmittel in der freien Position auf einem Radius zu liegen kommen können, der größer als der Radius des einzusteckenden Gewindeendes ist,
**dadurch gekennzeichnet, daß**
die Klemmittel ein im wesentlichen ringförmiges Greifelement (10) umfassen, das an einem Punkt unterbrochen und aus einem Federmaterial hergestellt ist, das in radialer Richtung nach außen gebogen werden kann, wobei das Greifelement und das Federelement Einzelteile sind.

2. Einsteck-Verriegelungselement nach Anspruch 1, bei dem der Übergang vom schmaleren Hohtraumabschnitt zum weiteren Hohlraumabschnitt schrittweise derart erfolgt, daß das Greifelement (10) dann, wenn ein Gewindeende (7) eingesteckt wird, durch Verformung des Federelements (11) in axialer Richtung aus dem schmaleren Hohlraumabschnitt (8) in den weiteren Hohlraumabschnitt (9) gezwungen wird und nur dort die Möglichkeit hat, in radialer Richtung nach außen gebogen zu werden, bis es sich in der freien Position befindet.

3. Einsteck-Verriegelungselement nach Anspruch 1 oder 2, bei dem das Greifelement (10) ein metallischer Federring ist.

4. Einsteck-Verriegelungselement nach einem der vorhergehenden Ansprüche, bei dem das Federelement (11) ein Federelement ist, das in axialer Richtung zusammendrückbar ist und bei Betrachtung in Einsteckrichtung (15) oberhalb des Greifelements (10) vorgesehen ist.

5. Einsteck-Verriegelungselement nach Anspruch 4, bei dem das Federelement (11) ein Gummi-O-Ring ist.

6. Einsteck-Verriegelungselement nach einem der vorhergehenden Ansprüche, bei dem das Greifelement (10) eine abgerundete innere Umfangskante mit einer Dicke besitzt, die kleiner oder gleich der Steigung des einzuschiebenden Gewindeendes (7) ist.

## Revendications

1. Élément de blocage par emboîtement, comprenant :
- un logement (2) avec une cavité (3) qui s'étend dans une direction axiale (15) et présente une ouverture d'emboîtement (4) dans laquelle une extrémité filetée (7) destinée à être verrouillée doit être enfoncée ;
- des moyens de serrage qui sont logés dans la cavité (3) et mobiles dans celle-ci entre une position libre et une position de serrage ;
- des moyens de ressort qui sont logés dans la cavité (3) pour solliciter les moyens de serrage dans la direction de la position de serrage et qui comprennent un élément de ressort (11) qui et déformable de manière élastique dans la direction axiale ;
dans lequel la cavité (3), vue dans la direction de l'enfoncement (15), comprend des pièces avec des dimensions radiales s'accroissant ;
dans lequel les moyens de serrage dans la partie la plus étroite de la cavité sont liés vers l'intérieur dans la direction radiale par des parties de parois périphériques de la partie de cavité la plus étroite,
dans laquelle les parties de bord de la position de serrage la plus intérieure des moyens de serrage sont situées sur un rayon qui est plus petit que le rayon de l'extrémité filetée qui doit être enfoncée; et
dans lequel les moyens de serrage dans la partie de la cavité la plus large ont la liberté de se déplacer vers l'extérieur dans la direction radiale vers une position libre, dans laquelle position libre les parties de bords les plus intérieurs des moyens de serrage peuvent venir reposer sur un rayon qui est plus grand que le rayon de l'extrémité filetée qui doit être enfoncée ;
**caractérisé en ce que** :
les moyens de serrage comprennent un élément de prise (10) sensiblement annulaire, qui est interrompu à un point et est fabriqué dans un matériau élastique qui peut dévier vers l'extérieur dans la direction radiale,
dans lequel l'élément de prise et l'élément de ressort sont des parts individuelles.

2. Élément de blocage par emboîtement selon la revendication 1, dans lequel la transition de la partie de cavité la plus étroite à la partie de cavité la plus large est progressive, de manière à ce que lorsque l'extrémité filetée (7) est enfoncée, l'élément de prise (10) est sollicité par déformation de l'élément de ressort (11) en direction axiale hors de la partie de cavité la plus étroite (8) dans la partie de cavité la plus large (9) et n'a ici que la possibilité de dévier vers l'extérieur dans la direction radiale que jusqu'à ce qu'il soit en position libre.

3. Élément de blocage par emboîtement selon la revendication 1 ou 2, dans lequel l'élément de prise (10) est une rondelle métallique à ressort.

4. Élément de blocage par emboîtement selon l'une quelconque des revendications précédentes, dans lequel l'élément de ressort (11) est un élément de ressort qui est compressible dans la direction axiale et qui, vu dans la direction de l'enfoncement (15) est pourvu au-dessus de l'élément de prise (10).

5. Élément de blocage par emboîtement selon la revendication 4, dans lequel l'élément de ressort (11) est un joint torique de caoutchouc.

6. Élément de blocage par emboîtement selon l'une quelconque des revendications précédentes, dans lequel l'élément de prise (10) présente un bord périphérique intérieur arrondi avec une épaisseur qui est inférieure ou égale au pas de l'extrémité filetée (7) qui doit être enfoncée.
